Europäisches Patentamt

(19) European Patent Office

Office européen des brevets

(11) Publication number: **0 020 827**
**B1**

(12) **EUROPEAN PATENT SPECIFICATION**

(45) Date of publication of patent specification: **01.12.82**

(51) Int. Cl.³: **H 04 B 3/46, H 04 L 1/00**

(21) Application number: **79301155.2**

(22) Date of filing: **15.06.79**

(54) An arrangement for monitoring the performance of a digital transmission system.

(43) Date of publication of application:
**07.01.81 Bulletin 81/1**

(45) Publication of the grant of the patent:
**01.12.82 Bulletin 82/48**

(84) Designated Contracting States:
**AT BE CH DE FR IT LU NL SE**

(56) References cited:
**CH - A - 588 791**
**DD - A - 108 876**
**DE - A - 1 804 719**
**GB - A - 1 278 877**
**US - A - 4 053 723**
**US - A - 4 097 697**

(73) Proprietor: **THE POST OFFICE**
**23 Howland Street**
**London W1P 6HQ (GB)**

(72) Inventor: **Gilliland, John Donald**
**63 Lockington Crescent**
**Stowmarket, Suffolk (GB)**

(74) Representative: **Smith, Norman Ian et al,**
**F.J. CLEVELAND & COMPANY 40-43 Chancery Lane**
**London WC2A 1JQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

An arrangement for monitoring the performance of a digital transmission system

This invention relates to monitoring the performance of a digital transmission system.

The performance of a digital radio system can be monitored by sensing the eye diagram amplitude. Any degradation of the system such as group delay, bandwidth limitation, or attenuation distortion, will appear as a decrease of the eye amplitude. In a typical digital receiver the output of a demodulator is sensed at particular instants in time in a level sensor which produces either binary "0" or binary "1" depending upon the level of the output of the demodulator. The threshold level of the level sensor is set at a value which corresponds substantially to the centre of the eye diagram amplitude.

It is known from DE—A—1804719 (Siemens) to provide a monitoring arrangement for a digital transmission system which has two further level sensors one of which has its threshold near the upper level of the eye diagram amplitude and the other of which has its thres old near the lower level of the eye diagram amplitude and means for producing an alarm signal when the upper or lower eye amplitude level is between the thresholds of the two further level sensors. Such a system will produce alarm signals when sometimes they are not required e.g. in a fade condition. The present invention provides a monitoring arrangement which attempts to avoid the production of spurious alarm signals.

According to the present invention there is provided a monitoring arrangement for monitoring the performance of digital transmission system comprising three level sensors for sensing at decision instants the level of a signal derived from a received signal, a first of the sensors having its threshold corresponding substantially to the centre of the eye diagram amplitude, a second of the sensors having its threshold near the upper level of the eye diagram amplitude, and the third of the sensors having its threshold near the lower level of the eye diagram amplitude, means for producing an alarm signal when the upper or lower eye amplitude level is between the thresholds of the second and third level sensors, characterised in that the arrangement includes means for monitoring the level of the received signal to provide a signal for inhibiting the alarm signal when the carrier to noise ratio of the received signal falls below a predetermined value.

The alarm signal producing means may include logic means for comparing the outputs of the second and third level sensors with the output of the first level sensor. The logic means may include first gate means arranged to receive the outputs of the first and second level sensors, second gate means arranged to receive the outputs of the first and third level sensors and resettable counting means for counting output pulses from said first and second gate means. The first and second gate means may comprise exclusive OR gates.

The invention will be described now by way of example only with particular reference to the accompanying drawings. In the drawings:

Figure 1 is a block schematic diagram of an eye amplitude monitor in accordance with the present invention, and

Figures 2 to 4 are waveform diagrams to illustrate the operation of the monitor.

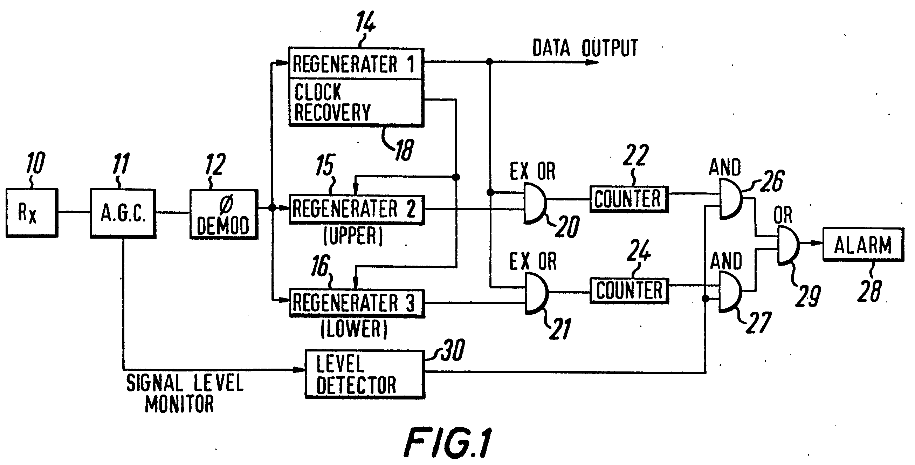

The eye amplitude monitor shown in Figure 1 has a receiveer 10 which is arranged to receive radio frequency carrier signals on which are modulated digital signals. The receiver has an output which is connected via an automatic gain control circuit 11 to a demodulator 12. The demodulator 12 has an output which is connected to the input of each of the three regenerator circuits 14, 15 and 16. The regenerator 14 constitutes a centre decision level sensor, the regenerator 15 an upper decision level sensor and the regenerator 16 a lower decision level sensor. The regenerator 14 has associated therewith a clock recovery circuit 18 and the clock signals derived from this clock recovery circuit are used to drive the regenerators 15 and 16. The output of the regenerator 14 constitutes the data output which is in the form of binary "0" or binary "1".

The output of the regenerators 15 and 16 are connected to one input of two exclusive OR gates 20, 21. The second input to the OR gates 20 and 21 is connected to the output of the regenerator 14. The output of each exclusive OR gate is connected to a resettable counter 22, 24 and the outputs of the counters are connected by AND gates 26, 27 and an OR gate 29 to an alarm 28.

The automatic gain control circuit 11 also has an output which is connected to a level detector 30. The output of the level detector is connected to a second input of the AND gates 26 and 27. The output from the automatic gain control circuit 11 to the level detector circuitry constitutes a signal level monitor.

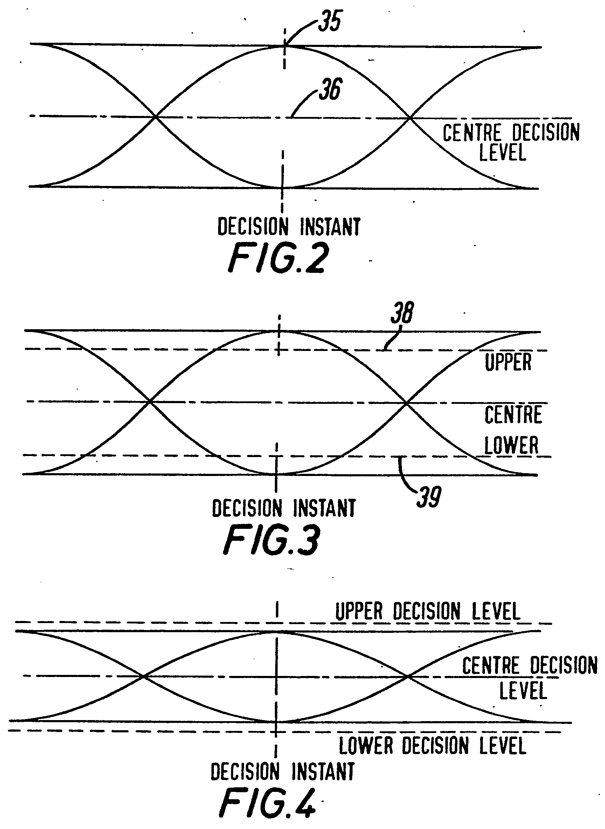

The operation of the monitor will now be described with reference to Figures 2 to 4. An eye amplitude diagram is shown in Figure 2 of the drawings. In a digital radio system the eye amplitude is a useful measure of the performance of the transmission link. Impairments of group delay, bandwidth limitations and attenuation distortion appear as a closing of the eye diagram amplitude. In a digital receiver of the type shown in Figure 1 the output of the demodulator 12 is regenerated to obtain the data output by sampling the demodulator output at a point in time when the amplitude of the demodulator output is a maximum and comparing it with a threshold which is at the centre of the eye diagram amplitude to determine whether the output is a "1" or "0". This is illustrated in Figure 2 and the decision instants are shown at 35. The centre decision level is illustrated by the dot dash line 36 and the regenerator 14 is set to sense whether the demodulator output is above or below this level.

The two additional regenerators 15 and 16 are used to sense when the amplitude of the waveform changes. The regenerator 15 has its decision level set at the position shown by the line 38 (Figure 2) which is towards the upper level of the eye diagram amplitude and the regenerator 16 has its decision level set at the position indicated by the line 39 i.e. towards the lower level of the eye diagram amplitude.

The regenerators are so set that when the diagram amplitude is normal as shown in Figure 3 the outputs of all three regenerators are the same i.e. all "1's" or all "0's". In this situation the outputs of the OR gates 20 and 21 are "0's". If a situation such as that shown in Figure 4 occurs then if the centre decision level regenerator 14 produces a "1" output the upper decision level regenerator produces a "0" (or if the centre decision level regeneraor indicates a "0" the lower decision regenerator will indicate a "1"). Thus by comparing the outputs of the three regenerators a change in the eye diagram amplitude can be detected. When either the upper or lower part of the eye diagram amplitude falls below its corresponding upper or lower decision level a "1" is obtained from the respective exclusive OR gate 20, 21. The outputs from the OR gates are entered into the respective counters 22, 24 which are cleared periodically. If one of the counters overflows before a clearing pulse arrives a monostable vibrator associated with the counter and with a time constant equal to the counter clearing frequency is triggered. The outputs of the monostable multi-vibrators associated with the counters 22, 24 are connected together with the output of the level detector 30 at the AND gates 26, 27. The output of the AND gates 26, 27 are connected to the OR gate 29 and the output of the OR gate is used to trigger the alarm 28 if the output of either counter 22, 24 overflows.

The connection from the automatic gain control circuit 11 via the level detector 30 is to prevent an alarm when there is a decrease in the carrier to noise ratio of a received signal as this could produce the same result as a decrease in high amplitude. By monitoring the carrier to noise ratio using the level detector 30 the alarm is disabled whenever the carrier to noise ratio falls below a certain value so that the alarm does not operate during a fade condition.

Most transmission degradations cause symmetrical closure of the eye diagram amplitude, but others cause asymmetrical closure (i.e. one half of the eye diagram degrades while the other half does not). It will be noted that in the arrangement shown in Figure 1 the upper and lower decision level regeneraors monitor the upper and lower halves of the eye diagram independently. Thus, it is possible to sense asymmetrical closures of the eye diagram with the present arrangement. It will also be noted that the monitor can distinguish between eye degradation due to low carrier to noise ratio and other degradations that degrade the eye diagram amplitude when the carrier to noise ratio is high.

**Claims**

1. A monitoring arrangement for monitoring the performance of digital transmission system comprising three level sensors (14, 15, 16) for sensing at decision instants the level of a signal derived from a received signal, a first (14) of the sensors having its threshold corresponding substantially to the centre of the eye diagram amplitude, a second (15) of the sensors having its threshold near the upper level of the eye diagram amplitude, and the third (16) of the sensors having its threshold near the lower level of the eye diagram amplitude, means (28) for producing an alarm signal when the upper or lower eye amplitude level is between the thresholds of the second and third level sensors, characterised in that the arrangement includes means (30) for monitoring the level of the received signal to provide a signal for inhibiting the alarm signal when the carrier to noise ratio of the received signal falls below a predetermined value.

2. A monitoring arrangement as claimed in claim 1 wherein the alarm signal producing means includes logic means (20 to 24) for comparing the outputs of the second and third level sensors with the output of the first level sensor.

3. A monitoring arrangement as claimed in claim 2 wherein the logic means include first gate means (20) arranged to receive the outputs of the first and second level sensors, second gate means (21) arranged to receive the outputs of the first and third level sensors and resettable counting means (22, 24) for counting output pulses from said gate means, an alarm signal being produced when either counting means has counted a predetermined number of pulses.

4. A monitoring arrangement as claimed in claim 3 wherein said first and second gate means (20, 21) comprise exclusive OR gates.

5. A monitoring arrangement as claimed in claim 3 or claim 4 wherein the output of each counting means (22, 24) is connected to one input of a respective one of two AND gates (26 27), a second input to each AND gate being the output from said monitoring means (30).

**Revendications**

1. Un dispositif de contrôle pour contrôler le fonctionnement d'un système de transmission numérique comprenant trois détecteurs de niveau (14, 15, 16) destinés à détecter à des instants de décision le niveau d'un signal élaboré à partir d'un signal reçu, le seuil d'un premier détecteur (14) correspondant pratiquement au centre de l'amplitude du diagramme de l'oeil, le seuil d'un second détecteur (15) étant voisin du niveau supérieur de l'amplitude du diagramme de l'oeil, et le seuil du troisième détecteur (16) étant voisin du niveau inférieur de l'amplitude du diagramme de l'oeil, des moyens (28) pour générer un signal d'alarme lorsque le niveau supérieur ou inférieur de l'amplitude de l'oeil est compris entre les seuils des second et troisième détecteurs de niveau, caractérisé en ce que le dispositif comprend des moyens (30) pour contrôler le niveau du signal reçu afin de produire un signal destiné à bloquer le signal d'alarme lorsque le rapport porteuse/bruit du signal reçu tombe au-dessous d'une valeur prédéterminée.

2. Un dispositif de contrôle selon la revendication 1 dans lequel les moyens de génération de signal d'alarme comprennent des moyens logiques (20 à 24) destinés à comparer les signaux de sortie des second et troisième détecteurs de niveau avec le signal de sortie du premier détecteur de niveau.

3. Un dispositif de contrôle selon la revendication 2 dans lequel les moyens logiques comprennent des premiers moyens à porte (20) conçus de façon à recevoir les signaux de sortie des premier et second détecteurs de niveau, des seconds moyens à porte (21) conçus de façon à recevoir les signaux de sortie des premier et troisième détecteurs de niveau et des moyens de comptage avec remise à zéro (22, 24) destinés à compter les impulsions de sortie des moyens à porte, et un signal d'alarme est généré lorsque l'un ou l'autre des moyens de comptage a compté un nombre prédéterminé d'impulsions.

4. Un dispositif de contrôle selon la revendication 3, caractérisé en ce que les premiers et seconds moyens à porte (20, 21) consistent en portes OU-EXCLUSIF.

5. Un dispositif de contrôle selon la revendication 3 ou la revendication 4 dans lequel la sortie de chacun des moyens de comptage (22, 24) est connectée à une entrée d'une porte respective parmi deux portes ET (26, 27) et un second signal d'entrée de chaque porte ET est constitué par le signal de sortie des moyens de contrôle (30).

**Patentansprüche**

1. Überwachungseinrichtung zur Betriebsüberwachung eines digitalen Übertragungssystems, das enthält:

— drei Pegelfühler (14, 15, 16), die zu einem Entscheidungsmoment den Pegel eines empfangenen Signals erfassen, wobei

— der erste Fühler (14) einen Schwellwert, der im wesentlichen der Mitte der Augen-Diagramm-Amplitude entspricht, besitzt,

— der zweite Fühler (15) einen Schwellwert in der Nähe des oberen Pegels der Augen-Diagramm-Amplitude besitzt, und

— der dritte Fühler (16) einen Schwellwert in der Nähe des unteren Pegels der Augen-Diagramm-Amplitude besitzt,

— eine Alarmeinrichtung (28), die ein Alarmsignal erzeugt, wenn der obere oder untere Augen-Amplituden-Pegel zwischen den Schwellwerten des zweiten- (15) und dritten Pegelfühlers (16) liegt,

dadurch gekennzeichnet, daß die Einrichtung einen weiteren Pegelfühler (30) aufweist, der den Pegel des empfangenen Signals überwacht und ein Signal zur Verhinderung des Alarmsignals erzeugt, wenn das Trägerfrequenz-Rauschverhältnis des empfangenen Signals unterhalb einem vorbestimmten Wert liegt.

2. Überwachungseinrichtung nach Anspruch 1, dadurch gekennzeichnet, daß der Alarmeinrichtung (28) eine Logik (20 bis 24) zugeordnet ist, die die Ausgangssignale des zweiten (15) und dritten Pegelfühlers (16) mit dem Ausgangssignal des ersten Pegelfühler (14) vergleicht.

3. Überwachungseinrichtung nach Anspruch 2, dadurch gekennzeichnet, daß die Logik eine erste Tor-Schaltung (20) aufweist, die die Ausgangssignale des ersten (14) und zweiten Pegelfühlers (15) empfängt, eine zweite Tor-Schaltung (21), die die Ausgangssignale des ersten (14) und dritten Pegelfühlers (16) empfängt und rücksetzbare Zähler (22, 24) enthält, die Ausgangsimpulse der Tor-Schaltungen zählen, wobei ein Alarmsignal erzeugt wird, wenn einer der Zähler eine vorbestimmte Impulszahl gezählt hat.

4. Überwachungseinrichtung nach Anspruch 3, dadurch gekennzeichnet, daß die erste und zweite Tor-Schaltung (20, 21) Exklusiv oder -gatter enthält.

5. Überwachungseinrichtung nach Anspruch 3 oder 4, dadurch gekennzeichnet, daß der Ausgang jedes Zählers (22, 24) mit jeweils einem Eingang von zwei UND-Gattern (26, 27) und der zweite Eingang jedes UND-Gatters mit dem Ausgang des weiteren Pegelfühlers (30) verbunden ist.

FIG.1

0 020 827

*35*

*36*

CENTRE DECISION
LEVEL

DECISION INSTANT

*FIG.2*

*38*

UPPER

CENTRE

LOWER

DECISION INSTANT                    *39*

*FIG.3*

UPPER DECISION LEVEL

CENTRE DECISION
LEVEL

LOWER DECISION LEVEL

DECISION INSTANT

*FIG.4*